(19)

Europäisches
Patentamt
European
Patent Office
Office européen
des brevets

(11) **EP 1 746 735 A1**

(12) **EUROPEAN PATENT APPLICATION**

(43) Date of publication:
**24.01.2007 Bulletin 2007/04**

(51) Int Cl.:
*H04B 1/38* (2006.01)      *H01Q 1/24* (2006.01)
*H04B 7/06* (2006.01)

(21) Application number: **05015725.4**

(22) Date of filing: **20.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Sony Ericsson Mobile Communications AB**
**221 88 Lund (SE)**

(72) Inventor: **Kabanov, Andrei**
**21431 Malmö (SE)**

(74) Representative: **Dahnér, Christer et al**
**Valea AB**
**Box 7086**
**103 87 Stockholm (SE)**

(54) **Antenna control arrangement and method**

(57)      The present invention is directed towards an antenna control arrangement (10) for a mobile terminal, said antenna control arrangement (10) comprising:
-an antenna block (1) for receiving and transmitting RF signals, said block comprising N antennas, having different antenna patterns, or an antenna having N selectable antenna patterns and N inputs, where N is two or more,
-a switching unit (2) for switching RF power to a selected number of said selectable antennas or antenna patterns in transmitting mode (TX) and reception mode (RX) depending on selection, and linked thereto

- a receiving unit (3) for receiving RF signals from said N antennas or antenna patterns, and linked thereto
-a comparator unit (4) for comparing and selecting the RF signals with the strongest RF level, and linked thereto
-a controller unit (12) for controlling
-an antenna control unit (5) arranged to provide switching signals to the switching unit (2) for switching RF power to the selected number of said selectable antennas in transmitting (TX) mode and reception mode (RX) depending on input from the controller unit (12).

Fig.1. MS using TRACL

EP 1 746 735 A1

## Description

TECHNICAL FIELD OF THE INVENTION

The present invention relates to the field of antennas and more particularly to an antenna control arrangement and method for a mobile terminal.

DESCRIPTION OF RELATED ART

Mobile terminals, such as cellular phones need to transmit with a certain amount of power to be able to work properly. There is a general problem within the field of radio communication, such as cellular communication technique, that the antenna power of the mobile terminal radiate in all directions over the air, thus also with non-optimized efficiency, for instance because of obstacles such as the user thereof himself blocking the transmitted signal with his body, for instance his head. For instance, omni directional antennas give rise to this kind of radiation. Moreover, since omni directional antennas typically also have low gain, the mobile terminal furthermore has to operate with high output power when received RF signal is low, which of course is another drawback.

A prior art solution trying to overcome problems with radiated power in all, i. e. also unwanted directions, is to use sector antennas instead. However, there is an important problem of practical use of such antenna types in mobile terminals.

Another prior art way of at least reducing the problems is to use two antennas instead of only one. In cellular phones of today, for instance EP-A1-1 229 664 describes this solution of two antennas. These antennas are used one by one when antenna matching is not very good. The criterion to switch over is a high level of return power (high SWR). This technical solution could not use antennas with different antenna patterns like omni and unidirectional because the cellular phone cannot operate with two different antennas in the application.

There is thus a need for a mobile terminal antenna control, in which transmitted radiated power can be better controlled.

SUMMARY OF THE INVENTION

An object of the present invention is to provide an antenna control arrangement and method for antenna control in a mobile terminal, which provides controlled transmitted power through antenna and that provides a high efficiency near the human body, in particular the head.

Another problem that the present invention solves is to provide antenna control that provides decreased transmitted radiated power in all directions compared to prior art antenna control.

According to the invention, these problems are solved by providing an antenna regulation loop with a feedback and thereto related control method, in particular by concentrating RF power in the opposite or side direction from the body keeping the desired receiving level.

According to a first aspect of the present invention, this object is achieved by an antenna control arrangement for a mobile terminal, said antenna control arrangement comprising:

- an antenna block for receiving and transmitting RF signals, said block comprising N selectable antennas, having different antenna patterns, or an antenna having N selectable antenna patterns and N inputs, where N is two or more,
- a switching unit for switching RF power to a selected number of said selectable antennas or antenna patterns in transmitting mode (TX) and reception mode (RX) depending on selection, and linked thereto
- a receiving unit for receiving RF signals from said N antennas or antenna patterns, and linked thereto
- a comparator unit for comparing and selecting the RF signals with the strongest RF level, and linked thereto
- a controller unit for controlling
- an antenna control unit arranged to provide switching signals to the switching unit for switching RF power to the selected number of said selectable antennas in transmitting (TX) mode and reception mode (RX) depending on input from the controller unit.

A second aspect of the present invention including the first aspect, is directed to an antenna arrangement, wherein the antenna block comprises N antennas, of which one is an omni directional antenna and the rest comprises NS sector antennas each having a beamwidth $\beta°$, where NS=1, 2...i and N= NS+1).

A third aspect of the present invention is directed towards an antenna control arrangement including the features of the first aspect, wherein said NS sector antennas cover a 360 °plane.

A fourth aspect of the present invention is directed towards an antenna control arrangement including the features of the third aspect, wherein the selection of RF power to transmitting antennas is arranged to be controlled by a control algorithm.

A fifth aspect of the present invention is directed towards an antenna control arrangement including the features of the third aspect, wherein the selection of RF power to transmitting antennas is arranged to be set as a default number.

A sixth aspect of the present invention, is directed towards an antenna control arrangement, including the features of the second aspect, wherein said NS sector antennas cover an angle $\varphi°$ of a plane.

A seventh aspect of the present invention is directed towards an antenna control arrangement, including the features of the aspect, wherein the antenna block only comprises NS sector antennas, which are further arranged to provide an omni directional antenna by radiating all together.

An eight aspect of the present invention is directed towards an antenna control arrangement including the features of any one of the first to the seventh aspect, wherein selection is automatic using a default algorithm.

A ninth aspect of the present invention is directed towards an antenna control arrangement including the features of any one of the first to the seventh aspect, wherein selection is automatic and voice controlled.

A tenth aspect of the present invention is directed towards an antenna control arrangement including the features of any one of the first to the seventh aspect, wherein selection is automatic using settings by user. An eleventh aspect of the present invention is directed towards an antenna control arrangement including the features of any one of the first aspect to the seventh aspect, wherein selection is fully automatic.

A twelveth aspect of the present invention is directed towards an antenna control arrangement including the features of any one of the previous aspects, wherein at least one sensor for detecting an object that has a particular distance to the sensor is provided.

A thirteenth aspect of the present invention is directed towards antenna control arrangement including the features of the twelveth aspect, wherein said sensor (s) is/are arranged to detect object including hand, head, phone holder, desk surface.

A fourteenth aspect of the present invention is directed towards:

a method for controlling antenna transmission power for a mobile terminal, said method comprising the steps:

- in an antenna block comprising N selectable antennas having N selectable antenna patterns or an antenna having N selectable antenna patterns, where N is two or more, receiving and transmitting RF signals, step 101,
- in a receiving unit receiving RF signals from said N antennas, step 102,
- in a comparator unit comparing and selecting the RF signals with the strongest RF level, step 103,
- controlling and providing switching signals to the switching unit for switching RF power to a selected number of said selectable antennas in transmitting mode (TX) depending on input from a control unit and antenna control unit, for selecting antenna(s) for transmission (TX antenna), step 104.

A fifteenth aspect of the present invention is directed towards a method including the features of the fourteenth aspect, wherein the selection of TX antenna (s) is provided automatic by means of a RF software algorithm.

A sixteenth aspect of the present invention is directed towards a method including the features of the fourteenth aspect, wherein the selection of TX antenna (s) is provided manually by means of an algorithm having Tx parameters defined by a user.

A seventeenth aspect of the present invention is directed towards a method including the features of the fifteenth aspect, wherein the automatic selection is provided by the MCSLC and CC.

An eighteenth aspect of the present invention is directed towards a methdo including the features of the seventeenth aspect, wherein the automatic selection is provided by a single sector antenna.

A nineteenth aspect of the present invention is directed towards a method including the features of the seventeenth aspect the automatic selection is provided by at least two sector antennas.

The invention has many advantages. Since the antenna arrangement in the mobile terminal being controlled by the antenna control arrangement and method according to the invention provides low RF radiation to a users body, in particular his head, efficiency is increased. Because of the antenna control arrangement and method, in transmission, RF gain is higher, whereby the mobile terminal having the antenna control arrangement and method according to the invention then consumes less DC power, which among other advantages extends the operational time before charging of batteries is necessary. Moreover, another important advantage is that interference level is lower in PLMN networks compared to prior art technology.

It should be emphasized that the term "comprises/comprising" when used in this specification is taken to specify the presence of stated features, integers, steps or components, but does not preclude the presence or addition of one or more other features, integers, steps, components or groups thereof.

BRIEF DESCRIPTION OF THE DRAWINGS

The present invention will now be described in more detail in relation to the enclosed drawings, in which:

Fig. 1 shows a block schematic of the relevant parts of the phone for performing the present invention,
Fig. 2 shows AB and RXTXS unit of Fig. 1,
Fig. 3 shows APA and ARA definition,
Fig. 4 shows pattern with 6 sector antennas (ABA1A),
Fig. 5 shows pattern with 3 sector antennas and one omni antennas (ABA1B),
Fig. 6 shows AB classification,
Fig. 7 shows MCRX unit 3,
Fig. 8 shows MCSLC unit 4,
Fig. 9 shows RXC unit 6, and
Fig. 10 shows VCM unit 10.
Fig. 11 shows a flow chart of a method according to an embodiment of the present invention.

DETAILED DESCRIPTION OF EMBODIMENTS

The present invention is directed towards solving the problem of providing an antenna control arrangement and method for an antenna arrangement in a portable radio communication arrangement, such as a cellular phone. By means of the invention, the antenna arrangement has transmitted power through different antenna and provides a high efficiency near the human body, in particular the head.

According to an aspect of the invention, an antenna control loop with a feedback is provided, i. e. an aspect of the invention is how to control signals going in/out to/from an antenna arrangement in a mobile terminal, or in other words how to receive signals from a few antennas and create a control signal to make a "correct" transmission, whereby the term "correct" means to select a correct TX antenna providing maximum signal efficiency.

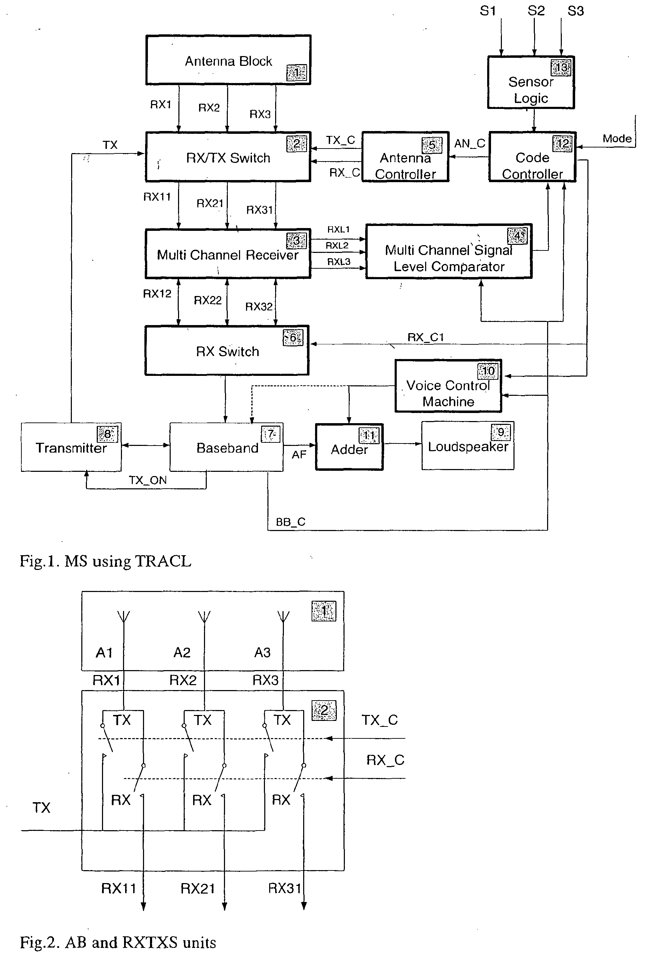

The invention will now be described in relation to an embodiment of the invention shown in schematic form in Fig. 1, which shows a block schematic of parts of a mobile terminal, embodied as a cellular phone, which are relevant to the problem and its solution.

In Fig. 1, the blocks directly related to the first described embodiment of the invention are indicated with bold lines. Other parts, related thereto, but conventional parts of the phone are also indicated (but without bold lines) for a better understanding of the invention, even though they are conventional parts. Thus, the invention is by no means limited to include all these parts. They are only intended to better illustrate and explain the invention.

The parts related to the described embodiment of the invention comprise: an Antenna Block (AB) 1 for receiving and transmitting RF signal by N antennas (not shown), thereto connected, a RX/TX Switch (RXTXS) 2, thereto connected, a Multi Channel Receiver (MCRX) 3, thereto connected, a Multi Channel Signal Level Comparator (MCSLC) 4, thereto connected, an Antenna Controller (ACR) 5, also connected to the RXTXS 2, a RX Switch (RXS) 6, connected to the MCRX, a Voice Control Machine (VCM) 10 (optional), an Adder 11 (optional), a Code Controller (CC) 12 and Sensor Logic 13 (optional).

Other relevant parts, which are conventional parts of the phone are: base-band 7, transmitter 8, and loudspeaker 9. The arrangement thereof in detail will not be described in this section, but later on, since they are not part of the embodiment of the invention but operating in relation to the same.

The blocks of the first embodiment of the invention (as well as thereto related conventional parts of the phone) will be described one by one below before in detail describing how the invention operates.

Antenna block (AB) 1:

The AB 1 is provided for receiving and transmitting RF signals by N (wherein N=2, 3, 4...) antennas (not shown), for instance 3, (A1, A2, A3) as indicated in Fig. 2.

The AB 1 can be provided as at least two different main alternatives, herein denoted "A" and "B", respectively.

The first alternative (shown in more detail Fig. 2) is ABA and consists of N (wherein N=2, 3, 4...) antennas for the same frequency band. All antennas have different patterns and ABA has N inputs/outputs for transmission of thereto related input/output signals X1, X2, X3,...XN (See Fig. 1).

The second alternative is ABB and consists of an antenna with selectable antenna pattern and N inputs/outputs (wherein N=2, 3, 4...) embodied for instance as a phased array antenna. However, since the understanding of the invention for a skilled person can be accomplished by describing the first alternative only (shown in Fig. 2), this second ABB alternative will not be discussed herein in more detail.

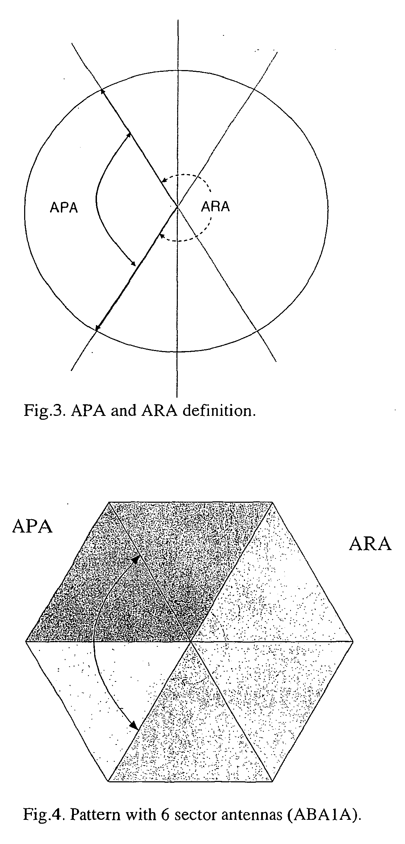

To be able to better understand the operating principle of the antennas in relation to the invention, reference is now made to Fig. 3 illustrating Antenna Protect Angle (APA) and Antenna Radiated Angle (ARA) in degrees. Both angles APA and ARA are provided by AB antenna patterns.

APA is the angle in a (horizontal) plane where the radiated AB performance (i. e. gain) is close to zero, no or minimum RF radiation in this angle. APA defines a zone, in which radiation typically is unwanted. Moreover, typically, APA = 180° is more preferred than APA= 120°. From Fig. 3, it follows that ARA+APA = 360°. This will not be discussed in more detail since APA is a parameter which the person skilled in the art can select.

Even if ARA and APA could be applied for both horizontal and vertical planes, ARAH and ARAV; respectively APAH and APAV, only the formerly, i. e. the horizontal plane will be discussed herein because of simplicity, but it is obvious for a person skilled in the art to apply the teaching thereof to the vertical plane as well.

It follows that there is a contradiction between good APA value (high efficiency) and ARA value (good communication with radio base station). Thus, one has to balance these two against each other.

To better understand the invention the invention, there are two main ABA alternatives that will be discussed as follows:

- ABA1, which consists of one omni directional antenna and NS sector antennas (where NS=1, 2..., and N=NS+1) or alternatively
- ABA2 that consists only of NS sector antennas (where N=NS)

To start, ABA1 will be described in more detail with reference to Fig. 4.

ABA1 comprises N antennas, of which one antenna is an omni directional antenna, and the rest NS sector antennas each having a beam width β°(where N=2, 3...and N=NS+1). ABA1 has N inputs/outputs connected to RXTXS 2 (as indicated in Fig. 1 and 2).

In Fig. 4, N=7, NS=6, i. e. there is shown 6 sector antennas only. The simplest ABA1 may consist of only two antennas, one omni directional antenna A1 and one sector antenna A2 (N=2, NS=1).

Preferably, there are two alternatives of ABA1:

- ABA1A, which consists of one omni directional antenna and NS sector antennas covering 360 ° (horizontal) plane as illustrated in Fig. 4, in which each triangle is a main antenna beamwidth (omni pattern is not shown because of simplicity). Then the number of sector antennas can be calculated as

$$NS=360°/\beta \qquad (1)$$

The angle APA= β *NP for ABA1A, where NP is number of possible disabled (i. e. not radiating or passive) sector antennas (NP<NS, NP=1, 2, 3,...) The number NP is in this case defined by default settings or alternatively by a special algorithm. The algorithm description is below.The angle ARA= β *NR, where NR is a total number of possible radiating antennas (NR=1, 2, 3,...) ; NP+NR=NS; NP+NR+1=N), where NR is defined by a control algorithm or alternatively as a default number. The whole (horizontal) plane is covered by omni antenna.

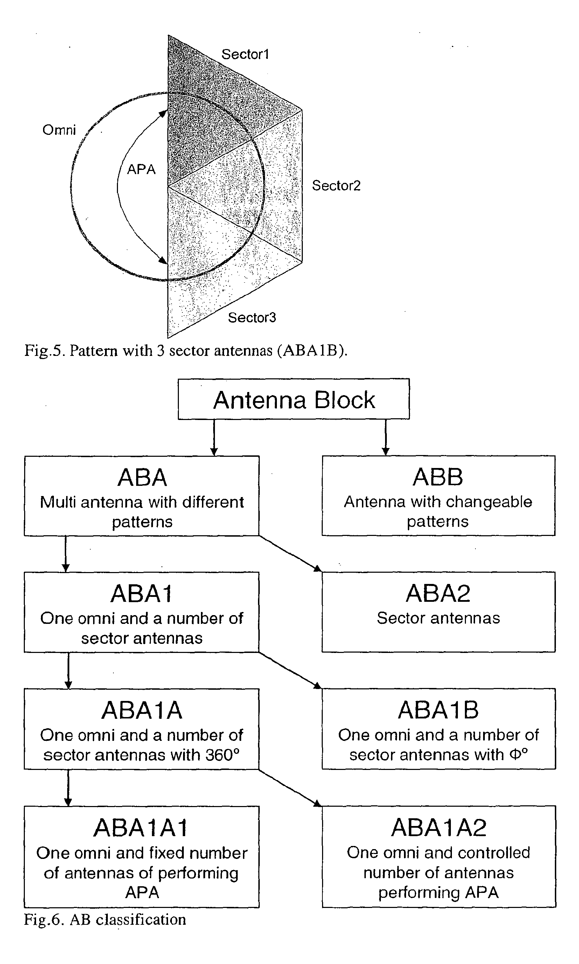

- ABA1B consists of NS sector antennas, which cover only angle φ < 360 ° of (horizontal) plane, and omni pattern as well (the example is shown in Fig. 5, where N = 4, NS = 3, APA = ARA =180 °). Then the number of sector antennas can be calculated as

$$NS=\varphi/\beta \qquad (2)$$

The angle ARA=NS*β; APA=360 °-β*NS
The total number of antennas N in ABA can be any suitable.

ABA1A description:

The whole (horizontal) plane is covered by omni antenna and NS sector antenna patterns. ARA includes NR main beam antennas and APA comprises NP antenna patterns (N=NP+NR+1), where NP is a number of disabled antennas in TX mode. NP could be set as a default value or manual value or could be selectable (as will be further explained in even more detail as follws under section "algorithm description".
In Fig. 4 N=7, NS-6; NR=4 and NP=2; APA=120 ° and ARA=240 °.

Some sector antennas NP have to be disabled in TX to provide APA. NP could be a default number. The disabled antennas operate only in Rx mode and they are not connected (radiating) in TX mode.

ABA1B description:

The sector antennas for ABA1B always do not cover the whole (horizontal) plane. Then the other directions in space are only covered by the omni antenna. In Fig. 5, an example of coverage with one omni and 3 sector antennas is shown.
When the phone is in RX mode all antennas always receive RF signal. When phone is in TX mode only a few antennas as one radiate at given moment (all others are disconnected).

ABA2 description:

As described before, ABA2 has only sector antennas, i. e. N=NS. The function of omni directional antenna could be provided by all sector antennas if they radiate all together. Thus, ABA2 differs from ABA1 only by the implementation of the omni directional antenna.
To better illustrate the various embodiments of the invention comprising alternative antenna blocks, a flow chart illustrating the antenna block alternatives is given in Fig. 6, wherein the same abbreviations is used as in this description.

RX/TX switch RXTS 2:

Now is referred to Fig. 1 and 2. The function of the RXTS 2 is to switch RX and TX signals in definite phone mode. The input RF signals are TX from Transmitter 8 and Rxi from AB1. The output RX signals are RX11, RX21, RX31,...RXN1. The control signals are TX_C and RX_C.
RXTXS 2 is used to switch RF power to the selected antenna/antennas in TX mode and to all receivers in RX mode. It comprises 2N keys. N keys in RX group and N keys in TX group. Typically, the keys are controlled in groups by two control signals RX_C and TX_C, which could be digital codes. The RXTXS unit 2 is shown in detail in Fig. 2, where 3 RX keys and 3 TX keys are provided (schematically illustrated only).
The RX_C signal always closes all keys in the RX group. The TX_C signal always closes only one or a few keys. The RX and TX keys cannot be closed at the same time.
The RXTXS 2 receives RX_C and TX_C signals from the ACR 5.

Multi Channel Receiver MCRX 3:

The MCRX receives RF signals from N antennas and processes N signals to get the level of each channel. Measured RF signal levels results are transmitted to MCSLC 4 by N channels. N processed RF signals are transmitted to the RXS 6.

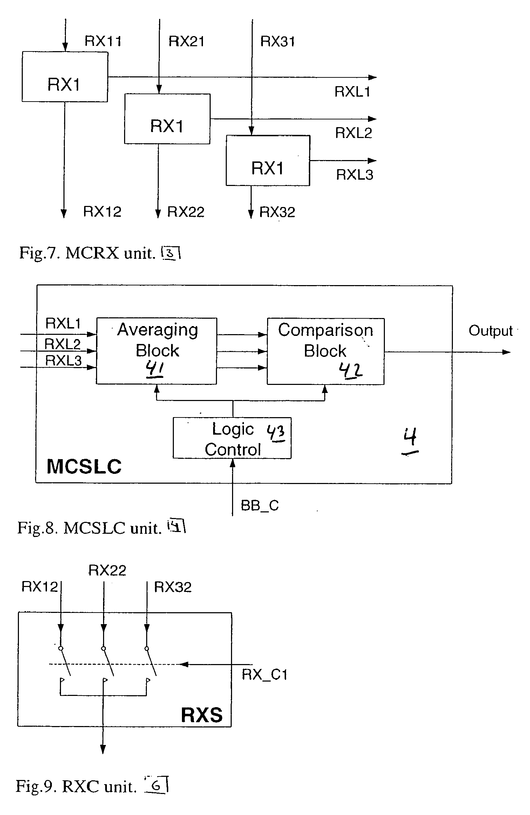

The MCRX 3 is typically a conventional N channel receiver with N inputs and N outputs, as illustrated in Fig. 7. Each RF receiver in the MCRX 3 is implemented in the same way as a mobile receiver.

N outputs as RX12, RX22, RX32,...RXN2 could be used to transmit RF or BB frequency to BB 7 (depending on implementation of receiver).

Each RX in the MCRX 3 has an RXL output signal with received RF signal level data. The RXL signals could be digital codes and a code number is a level of received RF by the receiver Rxi and antenna Ai.

The MCRX 3 is shown in Fig. 7 with 3 RX receivers (N=3). For example, the output signal RXL2 transmits to MCSLC 4 the level of RF signal received by A2 and RX2.

The data about all levels of RF signals from all antennas are transmitted to the MCSLC by N channels as RXL1, RXL2, RXL3,...RXLN.

Multi Channel Signal Level Comparator MCSLC 4:

The MCSLC 4 provides data from N receivers about the received signal level of each channel, processes the data and transmits the output digital code to the CC 12.

The input signals are RXL1, RXL2, RXL3,...RXLN. The output signal of MCSLC 4 is code containing data about the number of the channel having the highest received RF signal.

The MCSLC 4 is controlled by BB_C signal. This control function is used to select operational algorithm of the MCSLC 4.

The MCSLC 4 comprises Averaging Block (AVB) 41, Comparison Block (COB) 42 and Logic Control LCO 43, of which the block diagram is illustrated in Fig. 8.

The AVB 41 has N inputs and N outputs. N digital signals RXL1, RXL2,...carried RF signal strength level codes are transmitted to the AVB 41. The AVB 41 performs averaging of each input signal. The AVB 41 output signal can be multi-channel as well. Each of the N channels has the received RF level of a certain receiver RX. These signals (digital) are transmitted to COB 42 to compare and select the channel having the strongest level.

The AVB 41 is controlled by the LCO 43. The LCO 43 defines the number of averaging steps Y and a method of averaging in the AVB (examples of alternative methods of averaging are: simple-without reset, inputs, i. e. every input resets averaging; outputs, i.e. every output reset averaging). Y is a space memory of TRACL. The input control signal BB_C can change the internal mode of AVB 41 by setting LCO 43.

COB 42 is typically a digital comparator provided with N inputs but only one output. The COB compares all input digital signals by value. The output signal is a number of a channel with the highest RF level. For instance, if the signal from channel 2 is stronger than others (1 and 3), then the output signal will be the number of this channel-2 The COB 42 is controlled by the LCO 43 output signal. This control is useful to change a speed of the operational algorithm. The COB 42 can also be blocked by the LCO 43 when TRACL is open. The main functions of the COB 42 are

* comparison of input signals by value
* selection of a channel number with the highest RF level

LCO 43 is responsible to set different modes in AVB 41 and COB 42 including timing control.

MCSLC output signal is transmitted to CC 12, which will be described below.

Codes Controller CC 12:

The CC provides new codes for units ACO 5; RXS 6 and VCM 10, and can be implemented as simple logic. Typically, there are four input codes and only one present output code in CC 12, which could be different and depends on TX or RX.

The four input codes are "mode", "BB_C", SLO output and MCSLC output. The two output codes are AN_C and RX_C1 (See Fig.1).

Four income codes set different modes of antenna arrangement. There are some exapmles of different arrangement modes selected by user:

* automatic: using default setting (m1)
* voice: using automatic mode plus voice control to improve improve transmission/reception efficiency (m2)
* manual: (fixed configuration): using all settings by user (m3) for advanced application
* omni: using only omni directional antenna mode (m4) as in normal mobile terminal

m1 is a general mode of antenna when antennas selection is provided automatically by the control loop.

M2 is the most efficient user mode when antennas selection is provided automatically by the loop but antennas space position is controlled by user-to improve the efficiency of the device. This is the mode when RF exposure to a human body/head is minimum.

m3 is a fixed TX/RX antennas selection by user.

m4 is a mode when only omni directional performance is applied.

The invention is by no means limited to these modes only, but also sub-modes are possible even if they are not explicitly described without departing from the invention.

Antenna Controller ACR 5:

The ACR 5 provides the switch signals to control RXTXS by using the output CC 12 signal. There are two control signals as output signals, namely TX_C and RX_C. Each signal controls one group of keys in RXTXS, TX or RX.

The ACR 5 is a simple logic depending on input AN_C code.

RX Switch RXS 6:

The RXS 6 is a simple switch having N inputs and one output.

The RXS 6 is controlled by RX_C1 signal from the MCSLC 4. This signal switches RXS 6 to the position having the strongest RF output signal. The code of RX_C1 signal is equal to the code of the key which has to be closed.

RXS 6 is shown in Fig. 9 for N=3.

RXS 6 output signal is transmitted to BB 7.

The switching algorithm of RXS 6 could be different. It depends on the processing in BB. If there is a multi channel processing in BB 7, RXS 6 is different.

Base-band BB 7:

The BB 7 is a conventional block of the phone and will therefore not be described in more detail, since the function thereof is well known for a skilled person.

Transmitter TX 8:

TX 8 is a conventional block.

Loudspeaker LS 9:

LS 9 is a conventional block.

Voice Control Machine VCM 10:

The VCM 10 stores M codes input from the MCSLC, performs an analysis of the last M steps, creates a controlling code and transmits a controlling voice signal to LS 9. This voice informs the user about the best phone position in a space by LS 9.

VCM is available (ON) only in m2 mode. VCM is off in all other TRACL modes. BB controls the status of VCM 10 by BB_C.

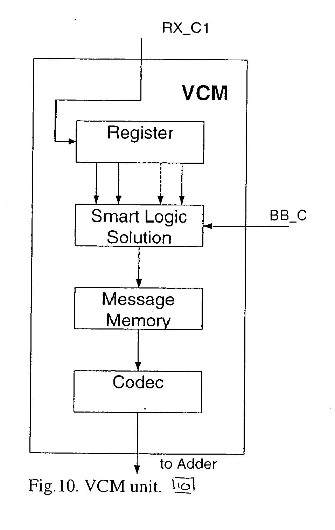

Now is referred to Fig. 10, in which the VCM 10 consists of Register (REG), Smart Logic Solution Unit (SLU), Message Memory (MME) and Codec (COD).

REG receives input codes from the MCSLC 4. REG stores M input codes. M is a space memory of the TRACL. Each code is the comparison result from the MCSLC 4. REG has up to M outputs. Each output signal is an input code on the particular step, for instance the output signal on the third register output is the code transmitted by the MCSLC 4 two steps behind.

The SLU 13 provides all M steps and creates the solution as digital output signal. This signal is used as a correct MME address to get the digital message from the memory MME. The message taken from MME is transmitted to COD to transform the stored MME digital signal to a voice message. Thus, the output of VCM 10 is a voice signal transmitted to AD 11 and then to LS 9.

The voice signal is transmitted to LS 9 as a voice controlling command to user. Commands are sentences for user-how to change the phone position in the space to improve the RX/TX parameters. Examples of voice messages are for instance: "turn left 45 degrees", "turn around", "turn right" etc.

Mode controlling link:

Conventional type.

Sensor Logic Unit SLO 13 (optional)

The SLO 13 collect data from different sensors provided in the phone and create a control code.

The SLO 13 creates different digital codes as an output signal in accordance with the status of provided sensors S.

Each sensor Si detects a particular position of the phone 100 in space. All positions of a phone are standard. The task of SLO 13 is to recognize the phone position and create an output code.

The functioning of the invention will now be made again with reference being made to Fig. 1 and 2. The operation thereof will be described for a ABA1B antenna but is not by no means limited to this particular embodiment of the invention. The antenna arrangement operates in m1 mode, i. e. automatic mode, no VCM available.

First in receiving mode, RX, all the AB antennas A1, A2, A3 are connected to the MCRX through RXTXS. All received RF signals are then processed in the MCRX and transmitted to the RXS. Then MCSLC selects the signal number having the highest signal level and then CC 12 controls RXS to receive RX signal. When it is switched to transmitting mode TX, CC 12 creates a code to control ACR and RXTXS. The output of the CC 12 depends on the status of BB_C signal, "mode" signal and status of all sensors. TX_C sets RXTXS to connect sector antennas for radiation. When VCM is active, the voice commands by LS help the user to change the position of the phone in the air to get best receiving level by sector antennas.

In RX, When the phone 10 receives downlink signal, CC 12 transmits AN_C signal to close all RX keys in RXTXS 2. ACR 5 creates two successive codes:

- RX_C to close all RX keys in RXTS
- TX_C to open all TX keys in RXTXS

The signals from all antennas RX11, RX21,... are transmitted to MCRX 3. The measurements result signals RXL1, RXL2,... are the product of MCRX operation. Each RXLi signal carries data about RF signal strength of i-antenna.

The MCLSC averages the input signals RXL1, RXL2,... and then compares these signals by value. The MCSLC 4 output signal is a number of line/antenna having the strongest signal. This number is transmitted to CC 12 to control switches.

CC 12 can generate different codes depedning on RX or TX.

RXS is switched by RX_C1 to select one of the input signals RX12, RX22,... having the strongest RF level.

Alternatively, there is possible to use a multi channel RXS (MCRXS) instead of the current one channel RXS 6 when multi BB is available.

RXS output signal is transmitted to BB.

In TX BB controls transmission by TX_ON and BB_C signals. The output signal of the transmitter TX 6 is transmitted to RXTXS 2.

There is a code AN_C taken from RX mode.

AN_C code created in RX session creates two signals to control RXTXS 2 (RX-C and TX_C, see Fig. 1). In TX session RX_C signal opens all RX keys in RXTXS 2. In TX session, TX_C signal closes one/some keys in accordandce with the strongest signal strength level from a certain antennas(s). The number of active antennas in TX depends on the working mode and AB implementation.

When the user moves in the air then different antennas will have the maximum signal level. Then different antennas will transmit power in a certain time slot.

M2 mode:

In m2 mode VCR is active. RX_C1 is transmitted to VCM 10 from CC 12. VCM 10 creates a voice message and transmits it through AD to LS. These voice messages help the user to change a position of a phone 10 to get the maximum level by sector antennas and to transmit RF power by sector antennas only.

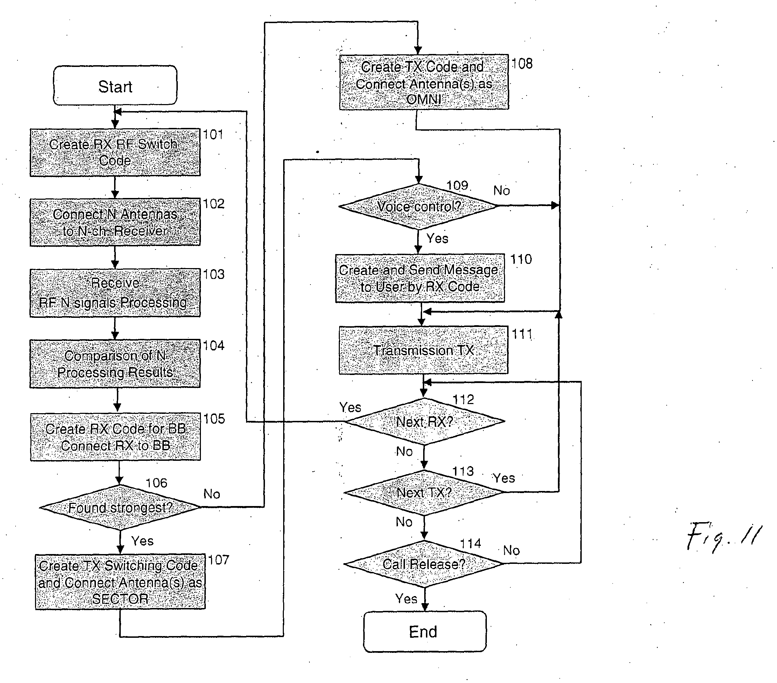

The invention is alternatively further embodied also as a method illustrated in Fig. 11. A step by step description thereof follows below, wherein each step number corresponds to the block number in Fig. 11.

101: After start there is creation of the code to control RF switch in RX mode-preparation to RX mode. The creation is provided in CC 12 through ACR 5.

102: There is provided connection of N RX keys and disconnection of all TX keys (in RXTXS 2).

103: RX mode in MCRX 3 is provided.

104: There is provided comparison of N processed signals (in MCSLC 4).

105: There is provided creation of RX code to control RX-BB connection (Rx_C1 code in CC 12).

106: There is provided checking condition of the stronest signal. If there is one signal stronger than others-go to step 107, if not-go to step 108 (in MCSLC 4).

107: There is provided creation of the TX RF switching code to connect sector antenna(s) to get SECTOR configuration) in CC 12 through ACR 5)-TX mode preparation.

108: There is provided creation of the TX RF switching code to connect antenna(s) to get OMNI configuration (in CC 12 through ACR 5)-TX mode preparation. This is valid if there is "no" answer in 106.

109: There is provided checking voice control condition (in VCM 10). If the answer is "no"-go to 111, transmission mode.

110: There is provided creation of message(s) in accordance with RX_C1 code (in VCM) and sending message(s) to user (by VCM 10 through AD 11 to LS 9). This is valid for the answer "yes" in step 109.

111: There is provided transmission mode (by TX 8 through RXTXS 2 to AB 1).

112: there is provided RX mode as next step (in BB 7). If there is next RX step-go to 101. If there is no-go to step 113.

113: There is provided TX mode as next step (in BB 7). If there is next TX step-go to step 111. If there is no-go to step 114.

114: There is provided checking call release condition. If there is a call release-end. If not-go to step 112.

Algorithm of TX antenna selection:

According to the method of the invention, there are two ways/algorithms to select TX antenna, namely:

Automatic selection by RX software algorithm; and
Alternatively manual selection algorithm when main TX parameters are defined by a user (typically suitable for an advanced user)

The first, i. e. the automatic selection by RX software is implemented in the following units of the algorithm: MCSLC 4 and CC 12. The software controls final TX antenna selection in BB. BB_C signal from BB7 can change selection principles in MCSLC 4 and CC 12. The signal "mode" transmitted to CC 12 can change TX selection principle as well.

There may be two sub modes in automatic selection, namely "narrow" and "wide".

The narrow sub mode will use a single sector antenna to radiate. This antenna is selected by the MCSLC 4 and the CC 12. The narrow sub mode is typically used when there are some sector antennas employed.

The wide sub mode will use a few antennas to radiate. The reason for wide radiation mode is to improve the RX quality in a case of quick position change. The minimum number of radiated antennas in this sub mode is two. The same blocks are responsible for TX selection.

These two sub modes are the options to implement in the cellular phone.

The manual selection is provided by user settings. The user can select the main parameters of TX: APA and ARA. The manual selection depends on the current AB 1 implementation. The manual selection is provided in BB 7. The user has to be driven by software in BB to get manual setting. If the user's setting are not optimum for TX/RX (RX/TX quality is bad) the BB software can change the manual mode to automatic or even to omni radiate mode.

The present invention has many advantages. Common for all embodiments of the present invention, is that they provide high antenna efficiency in transmission and have increased tranmission performance compared to prior art because of the inventive antenna control arrangement and method.

The present invention can also be varied in many ways. The invention was described in relation to a cellular phone, but a cellular phone is just one example of a arrangement in which the invention can be implemented. The invention can for instance also be used in a PDA (personal digital assistant), a palm top computer and a lap top computer. Therefore the present invention is only to be limited by the following claims.

**Claims**

1. Antenna control arrangement (10) for a mobile terminal, said antenna control arrangement (10) comprising:

   - an antenna block (1) for receiving and transmitting RF signals, said block comprising N antennas, having different antenna patterns, or an antenna having N selectable antenna patterns and N inputs, where N is two or more,
   - a switching unit (2) for switching RF power to a selected number of said selectable antennas or antenna patterns in transmitting mode (TX) and reception mode (RX) depending on selection, and linked thereto
   - a receiving unit (3) for receiving RF signals from said N antennas or antenna patterns, and linked thereto
   - a comparator unit (4) for comparing and selecting the RF signals with the strongest RF level, and linked thereto
   - a controller unit (12) for controlling
   - an antenna control unit (5) arranged to provide switching signals to the switching unit (2) for switching RF power to the selected number of said selectable antennas in transmitting (TX) mode and reception mode (RX) depending on input from the controller unit (12).

2. Antenna control arrangement according to claim 1, wherein the antenna block (1) comprises N antennas, of which one is an omni directional antenna and the rest comprises NS sector antennas, each having a beamwidth $\beta°$, where NS=1, 2...i and N= NS+1).

3. Antenna control arrangement according to claim 1, wherein said NS sector antennas cover a 360 ° plane.

4. Antenna control arrangement according to claim 3, wherein the selection of RF power to transmitting antennas is arranged to be controlled by a control algorithm.

5. Antenna control arrangement according to claim 3, wherein the selection of RF power to transmitting antennas is arranged to be set as a default number.

6. Antenna control arrangement according to claim 2, wherein said NS sector antennas cover an angle $\varphi°$ of a plane.

7. Antenna control arrangement according to claim 1, wherein the antenna block (1) only comprises NS sector antennas, which are further arranged to provide an omni directional antenna by radiating all together.

8. Antenna control arrangement according to any one of the preceding claims 1-7, wherein selection is automatic using a default algorithm.

9. Antenna control arrangement according to any one of the preceding claims 1-7, wherein selection is automatic and voice controlled.

10. Antenna control arrangement according to any one of the preceding claims 1-7, wherein selection is automatic using settings by user.

11. Antenna control arrangement according to any one of the preceding claims 1-7, wherein selection is fully automatic.

12. Antenna control arrangement according to any one of the preceding claims, wherein at least one sensor for detecting an object that has a particular distance to the sensor is provided.

13. Antenna control arrangement according to claim 12, wherein said sensor(s) is/are arranged to detect object including hand, head, phone holder, desk surface.

14. A method for controlling antenna transmission power for a mobile terminal, said method comprising the steps:

- in an antenna block comprising N selectable antennas having N selectable antenna patterns or an antenna having N selectable antenna patterns, where N is two or more, receiving and transmitting RF signals, step 101,
- in a receiving unit receiving RF signals from said N antennas, step 102,
- in a comparator unit comparing and selecting the RF signals with the strongest RF level, step 103,
- controlling and providing switching signals to the switching unit for switching RF power to a selected number of said selectable antennas in transmitting mode (TX) and reception mode (RX) depending on input from a control unit and antenna control unit, for selecting antenna(s) for transmission (TX antenna), step 104.

15. The method according to claim 14, wherein the selection of TX antenna(s) is provided automatic by means of a RF software algorithm.

16. The method according to claim 14, wherein the selection of TX antenna(s) is provided manually by means of an algorithm having Tx parameters defined by a user.

17. The method of claim 15, wherein the automatic selection is provided by the MCSLC 4 and CC 12.

18. The method of claim 17, wherein the automatic selection is provided by a single sector antenna.

19. The method of claim 17, wherein the automatic selection is provided by at least two sector antennas.

Fig.1. MS using TRACL

Fig.2. AB and RXTXS units

Fig.3. APA and ARA definition.

Fig.4. Pattern with 6 sector antennas (ABA1A).

Fig.5. Pattern with 3 sector antennas (ABA1B).

```
                    ┌─────────────────────┐
                    │    Antenna Block    │
                    └─────────────────────┘
```

| ABA<br>Multi antenna with different patterns | ABB<br>Antenna with changeable patterns |
|---|---|

| ABA1<br>One omni and a number of sector antennas | ABA2<br>Sector antennas |
|---|---|

| ABA1A<br>One omni and a number of sector antennas with 360° | ABA1B<br>One omni and a number of sector antennas with Φ° |
|---|---|

| ABA1A1<br>One omni and fixed number of antennas of performing APA | ABA1A2<br>One omni and controlled number of antennas performing APA |
|---|---|

Fig.6. AB classification

Fig.7. MCRX unit. [3]

Fig.8. MCSLC unit. [4]

Fig.9. RXC unit. [6]

RX_C1

**VCM**

Register

Smart Logic
Solution ← BB_C

Message
Memory

Codec

to Adder

Fig.10. VCM unit.

Fig. 11

**European Patent Office**

**EUROPEAN SEARCH REPORT**

Application Number

EP 05 01 5725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 977 304 A (KONINKLIJKE PHILIPS ELECTRONICS N.V) 2 February 2000 (2000-02-02) * abstract * * paragraphs [0001], [0004] - [0010], [0014] - [0022] * * figures 1,3 * | 1-19 | H04B1/38 H01Q1/24 H04B7/06 |
| X | EP 1 109 247 A (SIEMENS AKTIENGESELLSCHAFT) 20 June 2001 (2001-06-20) | 1-11, 14-19 | |
| A | * paragraphs [0001] - [0003], [0014] - [0019] * * claims 1-9 * * figures 2-4 * | 12,13 | |
| X | EP 0 752 735 A (DETEMOBIL DEUTSCHE TELEKOM MOBILNET GMBH) 8 January 1997 (1997-01-08) | 1-11, 14-19 | |
| A | * paragraphs [0001] - [0012], [0020], [0021] * * claims 1,6 * | 12,13 | |
| X | DE 44 10 174 A1 (ALCATEL SEL AKTIENGESELLSCHAFT, 70435 STUTTGART, DE) 28 September 1995 (1995-09-28) | 1-11, 14-19 | TECHNICAL FIELDS SEARCHED (IPC) H04B H04Q H01Q |
| A | * the whole document * | 12,13 | |
| X | WO 2004/040692 A (TANTIVY COMMUNICATIONS, INC) 13 May 2004 (2004-05-13) * abstract * * page 2, line 14 - page 3, line 7 * * page 6, line 1 - page 7, line 23 * * page 10, line 1 - page 11, line 24 * * page 13, line 13 - page 16, line 12 * * figure 2 * | 1-8,14, 15,17-19 | |

-/--

The present search report has been drawn up for all claims

| Place of search | Date of completion of the search | Examiner |
|---|---|---|
| Munich | 6 December 2005 | Fernández Cuenca, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 746 735 A1

**European Patent Office**

**EUROPEAN SEARCH REPORT**

Application Number

EP 05 01 5725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/52177 A (KONINKLIJKE PHILIPS ELECTRONICS N.V; PHILIPS AB) 14 October 1999 (1999-10-14) * the whole document * ----- | 1-11, 14-19 | |

TECHNICAL FIELDS SEARCHED (IPC)

The present search report has been drawn up for all claims

| Place of search | Date of completion of the search | Examiner |
|---|---|---|
| Munich | 6 December 2005 | Fernández Cuenca, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 5725

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2005

| Patent document cited in search report | | Publication date | Patent family member(s) | | Publication date |
|---|---|---|---|---|---|
| EP 0977304 | A | 02-02-2000 | CN | 1250234 A | 12-04-2000 |
| | | | JP | 2000124828 A | 28-04-2000 |
| | | | KR | 2000011967 A | 25-02-2000 |
| | | | SG | 85124 A1 | 19-12-2001 |
| | | | TW | 412896 B | 21-11-2000 |
| | | | US | 6456856 B1 | 24-09-2002 |
| EP 1109247 | A | 20-06-2001 | DE | 69917044 D1 | 09-06-2004 |
| | | | DE | 69917044 T2 | 09-09-2004 |
| | | | DK | 1109247 T3 | 02-08-2004 |
| EP 0752735 | A | 08-01-1997 | AT | 198012 T | 15-12-2000 |
| | | | DE | 19524288 C1 | 06-03-1997 |
| | | | ES | 2154364 T3 | 01-04-2001 |
| DE 4410174 | A1 | 28-09-1995 | NONE | | |
| WO 2004040692 | A | 13-05-2004 | AU | 2003285061 A1 | 25-05-2004 |
| | | | CA | 2503042 A1 | 13-05-2004 |
| | | | EP | 1559169 A1 | 03-08-2005 |
| WO 9952177 | A | 14-10-1999 | CN | 1262794 A | 09-08-2000 |
| | | | DE | 69915196 D1 | 08-04-2004 |
| | | | DE | 69915196 T2 | 03-02-2005 |
| | | | ES | 2215398 T3 | 01-10-2004 |
| | | | US | 6850785 B1 | 01-02-2005 |

For more details about this annex : see Official Journal of the European Patent Office, No. 12/82

**EP 1 746 735 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1229664 A1